# EUROPEAN PATENT SPECIFICATION

(11) **EP 3 534 017 B1**
(45) Date of publication and mention of the grant of the patent: **04.05.2022**
(21) Application number: 18159556.2
(22) Date of filing: 01.03.2018
(51) Int. Cl.: F16B 2/06, F16B 2/14, H05K 7/18

(54) **DEPTH ADJUSTMENT BRACKET**
HALTERUNG MIT TIEFENVERSTELLUNG
SUPPORT DE RÉGLAGE DE PROFONDEUR

(43) Date of publication of application: 04.09.2019
(73) Proprietor: ELDON Group, 28223 Madrid (ES)
(72) Inventor: Ramos, David, 28050 Madrid (ES)
(74) Representative: Grünecker Patent- und Rechtsanwälte PartG mbB

(56) References cited:
- EP-A1- 3 456 985
- DE-A1- 3 941 613
- DE-A1-102010 038 042

## Description

This invention relates generally to a device according to the preamble of claim 1 for attaching a construction part to a supporting structure, with a clamping device being lockable against the supporting structure.

The construction part is attachable to the clamping device, whereby the clamping device has an attachment surface for the construction part.

The clamping device includes two clamping elements, wherein both clamping elements have a clamping surface and a wedge-shaped surface, the latter one being slanted against the clamping surface respectively. In a completely mounted state of the device, the wedge-shaped surface of the second clamping element is adjunctive to the wedge-shaped surface of the first clamping element.

In that completely mounted state, the two clamping elements are fixed and clamped together by means of a fastening element in such a way, that through the interaction of the two wedge-shaped surfaces the two clamping surfaces are pressed against the supporting structure, which is located between both clamping surfaces. This allows the fastening element to be oriented in a different orientation other than orthogonal to the two clamping surfaces.

Furthermore, the first clamping element is outfitted with a first guiding element, and the second clamping element with a second guiding element, whereby both guiding elements interact with each other as guidance fixture for the two clamping elements. Both guiding elements can be brought into engagement with each other in such a way, that the second clamping element is retained in a pre-mounted position. The second clamping element can be transferred from this pre-mounted position into a completely mounted position by means of this guidance fixture.

DE 39 41 613 A1 discloses a device according to the preamble of the independent claim. In this device, that second clamping element can be brought into engagement with the first clamping element and be transferred from a pre-mounted position into a completely mounted position all by a linear movement. This can cause difficulties during assembly, especially during fastening of the clamping device, as the second clamping element might need to be held in place manually.

The present invention's object is to provide a clamping device that is easy to assemble.

This object is accomplished by the features of the independent claim 1. Accordingly, in the case of a device according to the preamble of the independent claim 1, an inventive solution to the object exists if the second clamping element is rotatable from a pre-mounted position into a position that, in relation to the orientation of the second clamping element relative to the first clamping element, is equivalent to the completely mounted position.

Thus the second clamping element can be rotated at least once during assembly of the device, in order to be transferred from the pre-mounted position to the completely mounted position.

The present invention allows an easier assembly of the clamping device. The rotation of the second clamping element permits one-handed operation, simplifying the assembly in confined spaces. This is particularly advantageous if the construction part is frequently changed or replaced, as this can be accompanied with the removal of the fastening element.

Advantageous embodiments of this invention are subject of the subclaims.

Preferably, the second clamping element can be rotated by at least 40° from the pre-mounted position into the completely mounted position. Therefore, it is ensured that the clamping device is retained enough to the supporting structure to maintain its position.

Preferably, the second clamping element can be rotated by at least 80° from the pre-mounted position into the completely mounted position. Therefore, it is ensured that the clamping device is retained enough to the supporting structure to maintain its position.

Preferably, the construction part is attached to the device, in its completely mounted state, by means of the fastening element fixating the first and second clamping element together. Thus, the construction part is held to the device by the very same fastening element that the device is held by to the supporting structure. Therefore the number of components is reduced and the assembly process is simplified and less labour intensive.

Preferably, either the first or second guiding element is implemented in the form of at least one stud, wherein the respective other guiding element is implemented in the form of at least one groove, wherein the stud can be brought into engagement with the groove. The stud is thereby inserted and moved along the curve of the groove, wherein the centreline of the stud is orthogonal to the direction of movement.

Preferably, the guiding element implemented in the form of at least one stud and the guiding element implemented in the form of at least one groove are shaped in such a way, that the first clamping element and the second clamping element can only be brought into engagement in a certain orientation. The orientation of insertion of the second clamping element given thereby is preferably identical to the orientation of the second clamping element in the pre-mounted position. The second clamping element is therefore retained to the first clamping element in an intermediate unfixed state that is equivalent in respect to the orientation of the clamping elements in the completely mounted state. Thus, the clamping device is protected against inadvertent disassembly and can be used in all orientations.

Preferably, the first clamping element has two first guiding elements, which are arranged on opposing sides of the first clamping element in mirror symmetry, wherein the second clamping element has two second guiding elements, which are arranged on opposing sides of the second clamping element in mirror symmetry. The two studs are therefore orientated along a common axis, that the second clamping element is rotatable about from a pre-mounted position into a completely mounted position. This also increases the stability of the second clamping element and secures it against tipping during assembly and further facilitates the assembly process.

Preferably, the supporting structure has a guiding fixture, which the first clamping element can be brought into engagement with.

Preferably, the first clamping element is mounted to the supporting structure by means of the guiding fixture in a movable manner. Thus, the position of the device can be easily adjusted during assembly. Another advantage of this embodiment is that the clamping device, in an intermediate unfixed state that is equivalent in respect to the orientation of the clamping elements in the completely mounted state, can be adjusted in position along this guiding fixture, while the clamping device is retained enough to the supporting structure to maintain its position. Therefore, the construction part can be attached to the clamping device before adjusting the position of the clamping device and the construction part respectively, and before subsequently fixing the clamping device to the supporting structure.

Preferably, the guiding fixture of the supporting structure is implemented in the form of a slot, which the first clamping element is mounted to in a movable manner. This aids keeping the first clamping element in position during assembly.

Preferably, the guiding element implemented as stud is part of the first clamping element, wherein the guiding fixture of the supporting structure implemented as a first slot has at least one second slot interconnected with the first slot, wherein the first clamping element is insertable through the second slot with the stud, and can be brought into engagement through shifting in such a way that the first clamping element is retained to the supporting structure. The first clamping element is therefore also secured against inadvertent removal after being mounted to the supporting structure in most positions, and subsequently completely safeguarded against accidental disassembly after attachment of the second clamping element to the first clamping element.

Preferably, the supporting structure on at least one side has a scale appropriate for measuring the position of the construction part. This simplifies the mounting of construction parts using multiple devices.

Preferably, the fastening element fixating the first clamping element and the second clamping element is implemented in the form of a screw.

Preferably, the thread for receiving the screw is implemented into one of the clamping element itself. This reduces the amount of parts required for assembly. The particular case, that the thread is part of the first clamping element, is additionally advantageous, as the screw is already aligned in its final orientation before fastening, allowing the use of closer tolerances for the hole in the construction part for receiving said screw, increasing the precision, the construction part can be mounted with.

Preferably, the device is used as a holding device in a wiring closet with vertical and horizontal struts that at least one supporting structure in form of a support rail, which a construction part in form of a mounting plate or mounting rail is attached to by means of said holding device. The support rail is thereby orientated perpendicular to the respective strut it is mounted to. Two or more support rails and corresponding holding devices can be used for mounting larger construction parts. In a preferred application a construction part is attached on two opposing sides to a wiring closet, using two clamping devices that hold the construction part to two support rails, which are mounted to two parallel struts of the wiring closet.

An example of the execution of this invention is explained in detail in the following drawings.
Figure 1 is an elevation isometric view of a preferred embodiment of the device according to the invention in conjunction with the frame of a wiring closet.
Figure 2 shows the first and second clamping element of the same embodiment in a disengaged position
Figures 3 to 6 show the clamping device of the same embodiment in various states of assembly with the supporting structure.
Figure 7 shows the clamping device of the same embodiment in an intermediate unfixed state that is equivalent in respect to the orientation of the clamping elements in the completely mounted state, with the supporting structure, wherein a cross-sectional plane is indicated.
Figure 8 shows a cross-section of the same embodiment along the plane shown in figure 7.

For the following explanations, the same parts are designated by the same reference signs. If a figure contains reference signs that are not described in more detail in the corresponding description of the figure, reference is made to preceding or subsequent descriptions of the figure.

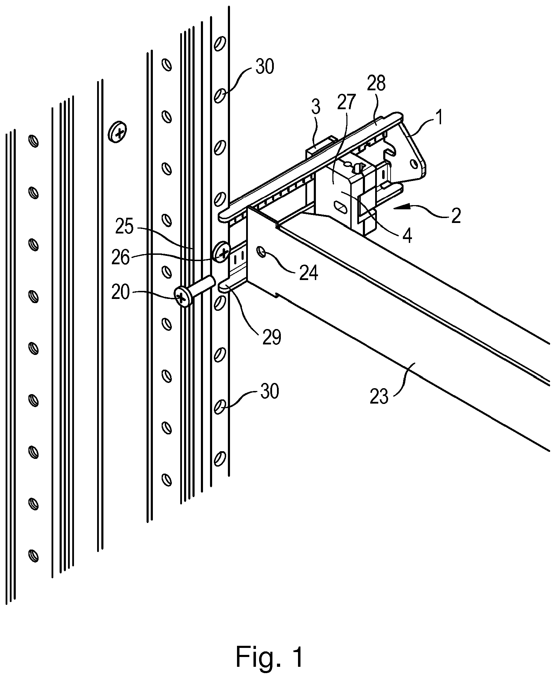

Figure 1 shows the clamping device 2 of a device according to the practical embodiment of the invention. The clamping device 2 has a first clamping element 3 and a second clamping element 4 that are attached to a supporting structure 1, which is implemented as a support rail and preferably mounted orthogonally to a vertical strut 25, which can be part of a wiring closet. A through hole 10 in the support rail 1 is used for attaching the support rail 1 to the strut 25 using a fastening element 26, preferably implemented as a second screw. The position of the support rail 1 with respect to the strut 25 can be adjusted by mounting the support rail 1 to distinct installation holes 30. The position and orientation of the support rail 1 can be stabilised with respect to the strut 25 by the use of at least one lug 29. The lug 29 is preferably implemented as an integrated part of a standing seam 28. Through form closure of the lug 29 with the strut 25 the support rail 1 can be secured against tipping, improving the ability of the support rail 1 to support the weight of the construction part 23.

The construction part 23 is attached to the attachment surface 27 of the clamping device 2, which is part of the second clamping element 4. Two or more clamping devices 2 in combination with an equivalent number of supporting structures 1 can be used to fully define position and orientation of the construction part with respect to its environment.

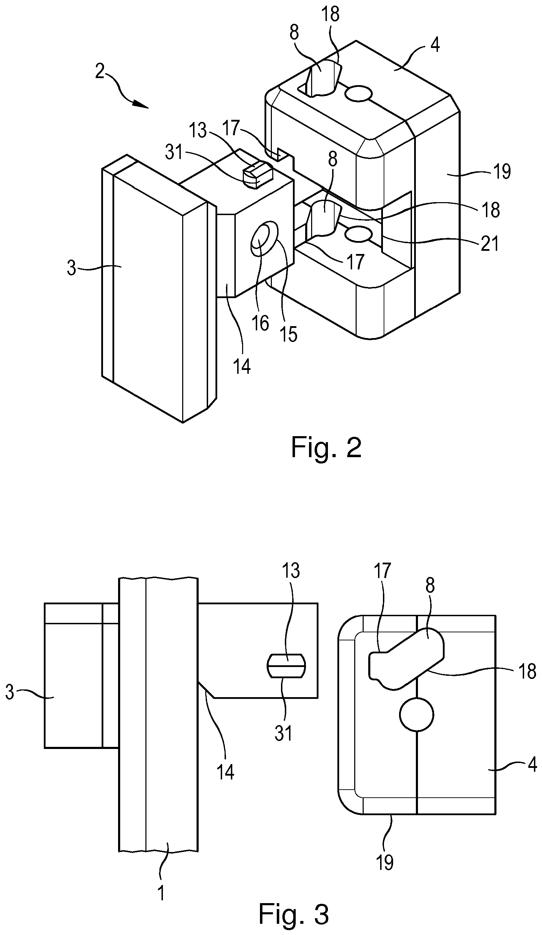

Figure 2 shows the first clamping element 3 and the second clamping element 4 prior assembly. The two elements are in an orientation equivalent to that of a pre-mounted state. Hereby the wedge-shaped surface 14 of the first clamping element 3 and the wedge-shaped surface 21 of the second clamping element 4 are at an angle of 90° to each other.

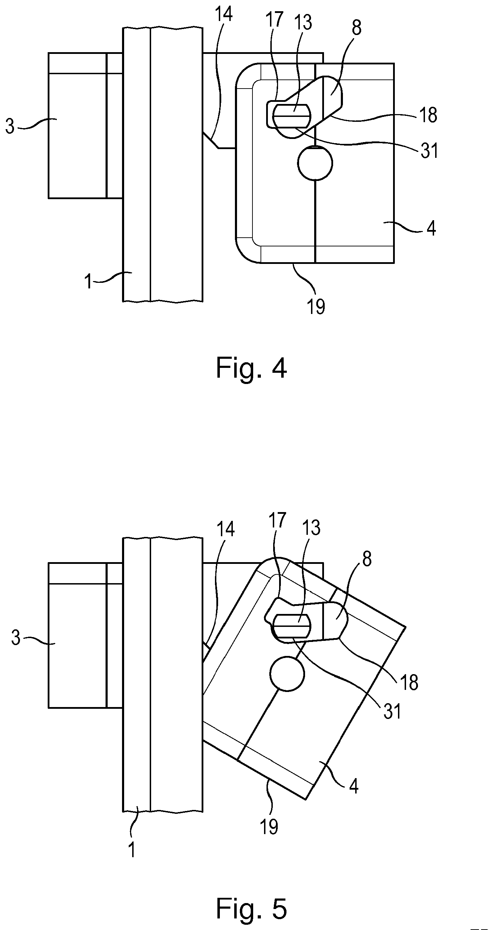

As shown in figure 3 and figure 4, the second clamping element 4 with its guiding elements implemented as grooves 8 can only be attached to the first clamping element 3 with its guiding elements implemented as studs 13 in the direction given by the two flat portions 31 of the studs 13 and a narrowed section 17 of the grooves 8. Thereby, the two grooves 8 in the second clamping element 4 and the two studs 13 on the first clamping element 3 are oriented in mirror symmetry on the respective part accordingly.

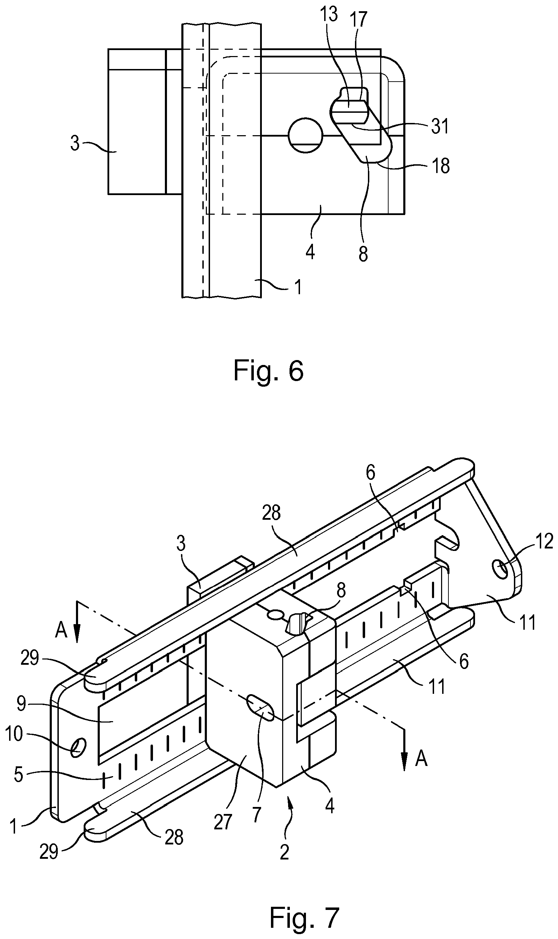

After attachment of the second clamping element 4 to the first clamping element 3, the widened section 18 of the grooves 8 allow the second clamping element 4 to be freely rotated on the studs 13, which is shown in figure 5. As in figure 6, the second clamping element can be rotated into a position that, with respect to the orientation of the second clamping element 4 to the first clamping element 3, is equivalent of the completely mounted position of the second clamping element 4.

In figure 7 the clamping device 2 is shown in an intermediate unfixed state that is equivalent in respect to the orientation of the clamping elements in the completely mounted state, with the support rail. The position of the clamping device 2 with respect to the support rail 1 can be adjusted along a guiding device in form of a first slot 9. The position of the clamping device 2 and thereby the position of the construction part 23 is determinable by an appropriate scale on the support rail 1.

The first clamping element 3 is insertable into the first slot 9 through a set of second slots 6, which are interconnected with the first slot, wherein the studs 13 of the first clamping element 3 can be inserted through the second slots 6 an a certain position of first clamping element 3 with respect to the support rail 1. The first slot 9 therefore encompasses the bar-shaped section 32 of the first clamping element 3.

The support rail 1 can have a retaining surface 11, securing the clamping device against removal in a direction parallel to support rail. This retaining surface 11 can have a through hole 12 in alignment with the tapped hole 15 of the first clamping element 3 in a completely mounted state of the clamping device 2, to allow the use of an oversized screw 20 in all positions of the clamping device 2 with respect to the support rail 1.

The stiffness of the support rail 1 can be increased by the use of at least one standing seam 28. The standing seam 28 can also support the clamping device 2 and secure it against tipping.

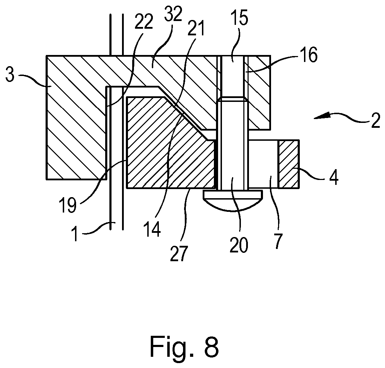

A cross section of the clamping device along the plane indicated by the dotted line in figure 7 is shown in figure 8. The cross-sectional view additionally contains the fastening element 20 for clamping the first clamping element 3 and second clamping element 4 together. As can be seen, both the clamping surface 22 with the wedge-shaped surface 14 of the first clamping element 3 and the clamping surface 19 with the wedge-shaped surface 21 of the second clamping element 4 enclose an angle of 45° respectively. In the first clamping element 3, the clamping surface 22 and the wedge-shaped surface 14 are connected with a bar-shaped section 32 of the first clamping element 3. In a completely mounted state, the wedge-shaped surface 21 of the second clamping element 4 is direct contact with the wedge-shaped surface 14 of the first clamping element 3, and can slide along the resulting contact surface. By tightening the fastening element implemented as a screw 20, the axial motion of the second clamping element 4 induced by turning the screw 20 inside the thread 16 of the tapped hole 15, is translated into a lateral motion by the interaction of the two wedge-shaped surfaces 14 and 21, pressing the two clamping surfaces 19 and 22 together.

The screw 20 is thereby inserted through a slotted hole 7 in the second clamping element 4, which is orientated in the direction of lateral motion of the second clamping element 4 relative to the first clamping element 3. The overall motion of the second clamping element 4 in a diagonal direction is also supported by the oblique shape of the widened section 18 of the grooves 8 in the second clamping element 4.The lateral movement of the two clamping elements 3 and 4 presses the two clamping surfaces 19 and 22 against the support rail 1.

In this preferred embodiment, the first clamping element 3 and the second clamping element 4 are implemented as injection-moulded parts and consist of a form-stable plastic material. The clamping elements 3 and 4 can themselves consist of more than one component and can be designed to be hollow for material savings.

The skilled person will appreciate that the inventor is not limited to the above embodiment. Instead of having the clamping device clamped to a slotted support rail partially encompassing the first clamping element, it is of course also possible to clamp the clamping device to a supporting structure transverse to the support rail described in the above embodiment.

## Claims

1. Device for attaching a construction part (23) to a supporting structure (1), with a clamping device (2) being lockable against the supporting structure (1), wherein the construction part (23) is attachable to the clamping device (2), and wherein the clamping device (2) has an attachment surface (27) for the construction part, wherein the clamping device (2) has a first clamping element (3) and a second clamping element (4), wherein the first clamping element (3) has a first clamping surface (22) and first wedge-shaped surface (14) being slanted relative to the first clamping surface (22), and wherein the second clamping element (4) has a second clamping surface (19) and a second wedge-shaped surface (21) being slanted relative to the second clamping surface (19) and being in direct contact with the first wedge-shaped surface (14) in a completely mounted state of the clamping device (2), wherein the first clamping element (3) and second clamping element (4) are fixed and clamped together in a completely mounted state by means of a fastening element (20) in such a way, that the first clamping surface (22) and the second clamping surface (19) are, through interaction of the first wedge-shaped surface (14) and the second wedge-shaped surface (21), pressed against the supporting structure (1) arranged in between the first clamping surface (22) and the second clamping surface (19), wherein the first clamping element (3) additionally has at least one first guiding element (13) and the second clamping element has at least one second guiding element (8), wherein the first and second guiding elements (13, 8) interact as guidance fixture and can be brought into engagement in such a way, that the second clamping element (4) is retained at the first clamping element (3) in a pre-mounted position and is transferable from the pre-mounted position into a completely mounted position, **characterised in that** the second clamping element (4) is rotatable from the pre-mounted position into a position that, with respect to the orientation of the second clamping element (4) relative to the first clamping element (3), is equivalent to the completely mounted position of the second clamping element (4).

2. Device according to claim **1, characterised in that** the second clamping element (4) is rotatable by at least 40° from the pre-mounted position into a position that, in relation to the orientation of the second clamping element (4) relative to the first clamping element (3), is equivalent to the completely mounted position.

3. Device according to claim **2, characterised in that** the second clamping element (4) is rotatable by at least 80° from the pre-mounted position into a position that, in relation to the orientation of the second clamping element (4) relative to the first clamping element (3), is equivalent to the completely mounted position.

4. Device according to one of the claims **1** to **3, characterised in that** the device further comprises the construction part (23), wherein the construction part (23), in a completely mounted state of the clamping device (2), is attached to the clamping device (2) by means of the fastening element (20) fixating the first and second clamping elements (3, 4).

5. Device according to one of the claims **1** to **4, characterised in that** either the first guiding element (13) or the second guiding element (8) is implemented in the form of at least one stud, wherein the respective other guiding element is implemented in the form of at least one groove, wherein the stud can be brought into engagement with the groove.

6. Device according to claim **5, characterised in that** the guiding element (13) implemented in the form of at least one stud and the guiding element (8) implemented in the form of at least one groove are shaped in such a way, that the first clamping element (3) and the second clamping element (4) can only be brought into engagement in a certain orientation.

7. Device according to one of the claims **5** or **6, characterised in that** the first clamping element (3) has two first guiding elements (13), which are arranged on opposing sides of the first clamping element (3) in mirror symmetry, wherein the second clamping element (4) has two second guiding elements (8), which are arranged on opposing sides of the second clamping element (4) in mirror symmetry.

8. Device according to one of the claims **1** to **7, characterised in that** the device further comprises the supporting structure (1), wherein the supporting structure (1) has a guiding fixture (9), which the first clamping element (3) can be brought into engagement with.

9. Device according to claim **8, characterised in that** the first clamping element (3) is mounted to the supporting structure (1) by means of the guiding fixture (9) in a movable manner.

10. Device according to one of the claims **8** or **9, characterised in that** the guiding fixture (9) of the supporting structure (1) is implemented in the form of a slot, which the first clamping element (3) is mounted to in a movable manner.

11. Device according to one of the claims **5** to **7,** as well as claim **10, characterised in that** the guiding element implemented as stud is part of the first clamping element (3), wherein the guiding fixture (9) of the supporting structure (1) implemented as a first slot has at least one second slot (6) interconnected with the first slot, wherein the first clamping element (3) is insertable through the second slot (6) with the stud, and can be brought into engagement through shifting in such a way that the first clamping element (3) is retained to the supporting structure (1).

12. Device according to one of the claims **1** to **11, characterised in that** the supporting structure (1) on at least one side has a scale (5) appropriate for determining the position of the construction part (23).

13. Device according to one of the claims **1** to **12, characterised in that** the fastening element (20) fixating the first clamping element (3) and the second clamping element (4) is implemented in the form of a screw.

14. Device according to claim **13, characterised in that** the thread (16) for receiving the screw is implemented into one of the first or second clamping elements (3, 4) itself.

15. Wiring closet with vertical struts (25) and horizontal struts that at least one supporting structure (1) in form of a support rail, which a construction part (23) in form of a mounting plate or mounting rail is attached to by means of a holding device, can be mounted to, **characterised in that** the holding device is a device according to one of the claims **1** to **14.**

## Patentansprüche

1. Vorrichtung zum Anbringen eines Bauteils (23) an einer Tragestruktur (1), wobei eine Klemmvorrichtung (2) an der Tragestruktur (1) arretiert werden kann, das Bauteil (23) an der Klemmvorrichtung (2) angebracht werden kann, und die Klemmvorrichtung (2) eine Anbringungsfläche (27) für das Bauteil aufweist, wobei die Klemmvorrichtung (2) ein erstes Klemmelement (3) und ein zweites Klemmelement (4) aufweist, das erste Klemmelement (3) eine erste Klemmfläche (22) und eine erste keilförmige Fläche (14) aufweist, die relativ zu der ersten Klemmfläche (22) abgeschrägt ist, und das zweite Klemmelement (4) eine zweite Klemmfläche (19) sowie eine zweite keilförmige Fläche (21) aufweist, die relativ zu der zweiten Klemmfläche (19) abgeschrägt ist und in einem vollständig montierten Zustand der Klemmvorrichtung (2) in direktem Kontakt mit der ersten keilförmigen Fläche (14) ist, das erste Klemmelement (3) und das zweite Klemmelement (4) in einem vollständig montierten Zustand mittels eines Befestigungselementes (20) so fixiert und aneinandergeklemmt sind, dass die erste Klemmfläche (22) und die zweite Klemmfläche (19) durch Zusammenwirken der ersten keilförmigen Fläche (14) und der zweiten keilförmigen Fläche (21) an die zwischen der ersten Klemmfläche (22) und der zweiten Klemmfläche (19) angeordnete Tragestruktur (1) gedrückt werden, das erste Klemmelement (3) zusätzlich wenigstens ein erstes Führungselement (13) aufweist und das zweite Klemmelement wenigstens ein zweites Führungselement (8) aufweist, wobei das erste und das zweite Führungselement (13, 8) als Führungsanordnung zusammenwirken und so in Eingriff gebracht werden können, dass das zweite Klemmelement (4) in einer vormontierten Position an dem ersten Klemmelement (3) gehalten wird und aus der vormontierten Position in eine vollständig montierte Position überführt werden kann, **dadurch gekennzeichnet, dass** das zweite Klemmelement (4) aus der vormontierten Position in eine Position gedreht werden kann, die in Bezug auf die Ausrichtung des zweiten Klemmelementes (4) relativ zu dem ersten Klemmelement (3) äquivalent zu der vollständig montierten Position des zweiten Klemmelementes (4) ist.

2. Vorrichtung nach Anspruch 1, **dadurch gekennzeichnet, dass** das zweite Klemmelement (4) um wenigstens 40° aus der vormontierten Position in eine Position gedreht werden kann, die in Bezug auf die Ausrichtung des zweiten Klemmelementes (4) relativ zu dem ersten Klemmelement (3) äquivalent zu der vollständig montierten Position ist.

3. Vorrichtung nach Anspruch 2, **dadurch gekennzeichnet, dass** das zweite Klemmelement (4) um wenigstens 80° aus der vormontierten Position in eine Position gedreht werden kann, die in Bezug auf die Ausrichtung des zweiten Klemmelementes (4) relativ zu dem ersten Klemmelement (3) äquivalent zu der vollständig montierten Position ist.

4. Vorrichtung nach einem der Ansprüche 1 bis 3, **dadurch gekennzeichnet, dass** die Vorrichtung des Weiteren das Bauteil (23) umfasst, wobei das Bauteil (23) in einem vollständig montierten Zustand der Klemmvorrichtung (2) mittels des Befestigungselementes (20), das das erste und das zweite Klemmelement (3, 4) fixiert, an der Klemmvorrichtung (2) angebracht ist.

5. Vorrichtung nach einem der Ansprüche 1 bis 4, **dadurch gekennzeichnet, dass** entweder das erste Führungselement (13) oder das zweite Führungselement (8) in der Form wenigstens eines Zapfens ausgeführt ist, wobei das jeweilige andere Führungselement in der Form wenigstens einer Nut ausgeführt ist und der Zapfen mit der Nut in Eingriff gebracht werden kann.

6. Vorrichtung nach Anspruch 5, **dadurch gekennzeichnet, dass** das in der Form wenigstens eines Zapfens ausgeführte Führungselement (13) und das in der Form wenigstens einer Nut ausgeführte Führungselement (8) so geformt sind, dass das erste Klemmelement (3) und das zweite Klemmelement (4) nur in einer bestimmten Ausrichtung in Eingriff gebracht werden können.

7. Vorrichtung nach einem der Ansprüche 5 oder 6, **dadurch gekennzeichnet, dass** das erste Klemmelement (3) zwei erste Führungselemente (13) aufweist, die an gegenüberliegenden Seiten des ersten Klemmelementes (3) spiegelsymmetrisch angeordnet sind, wobei das zweite Klemmelement (4) zwei zweite Führungselemente (8) aufweist, die an gegenüberliegenden Seiten des zweiten Klemmelementes (4) spiegelsymmetrisch angeordnet sind.

8. Vorrichtung nach einem der Ansprüche 1 bis 7, **dadurch gekennzeichnet, dass** die Vorrichtung des Weiteren die Tragestruktur (1) umfasst, wobei die Tragestruktur (1) eine Führungsanordnung (9) aufweist, mit der das erste Klemmelement (3) in Eingriff gebracht werden kann.

9. Vorrichtung nach Anspruch 8, **dadurch gekennzeichnet, dass** das erste Klemmelement (3) mittels der Führungsanordnung (9) beweglich an der Tragestruktur (1) angebracht ist.

10. Vorrichtung nach einem der Ansprüche 8 oder 9, **dadurch gekennzeichnet, dass** die Führungsanordnung (9) der Tragestruktur (1) in der Form eines Schlitzes ausgeführt ist, in dem das erste Klemmelement (3) beweglich angebracht ist.

11. Vorrichtung nach einem der Ansprüche 5 bis 7 sowie nach Anspruch 10, **dadurch gekennzeichnet, dass** das als Zapfen ausgeführte Führungselement Teil des ersten Klemmelementes (3) ist, wobei die als ein erster Schlitz ausgeführte Führungsanordnung (9) der Tragestruktur (1) wenigstens einen mit dem ersten Schlitz verbundenen zweiten Schlitz (6) aufweist, das erste Klemmelement (3) mit dem Zapfen über den zweiten Schlitz (6) eingeführt werden und durch Verschieben so in Eingriff gebracht werden kann, dass das erste Klemmelement (3) an der Tragestruktur (1) gehalten wird.

12. Vorrichtung nach einem der Ansprüche 1 bis 11, **dadurch gekennzeichnet, dass** die Tragestruktur (1) an wenigstens einer Seite eine zum Bestimmen der Position des Bauteils (23) geeignete Skala (5) aufweist.

13. Vorrichtung nach einem der Ansprüche 1 bis 12, **dadurch gekennzeichnet, dass** das Befestigungselement (20), das das erste Klemmelement (3) und das zweite Klemmelement (4) fixiert, in der Form einer Schraube ausgeführt ist.

14. Vorrichtung nach Anspruch 13, **dadurch gekennzeichnet, dass** das Gewinde (16) zum Aufnehmen der Schraube in dem ersten oder in dem zweiten Klemmelement (3, 4) selbst ausgeführt ist.

15. Verteilerschrank mit vertikalen Streben (25) und horizontalen Streben, an denen wenigstens eine Tragestruktur (1) in Form einer Trageschiene, an der ein Bauteil (23) in Form einer Montageplatte oder Montageschiene mittels einer Haltevorrichtung angebracht ist, montiert werden kann, **dadurch gekennzeichnet, dass** die Haltevorrichtung eine Vorrichtung nach einem der Ansprüche 1 bis 14 ist.

## Revendications

1. Dispositif permettant d'attacher une pièce de construction (23) à une structure de support (1), avec un dispositif de serrage (2) pouvant être verrouillé contre la structure de support (1), dans lequel la pièce de construction (23) peut être attachée au dispositif de serrage (2), et dans lequel le dispositif de serrage (2) a une surface d'attache (27) pour la pièce de construction, dans lequel le dispositif de serrage (2) a un premier élément de serrage (3) et un deuxième élément de serrage (4), dans lequel le premier élément de serrage (3) a une première surface de serrage (22) et une première surface en forme de coin (14) qui est inclinée par rapport à la première surface de serrage (22), et dans lequel le deuxième élément de serrage (4) a une deuxième surface de serrage (19) et une deuxième surface en forme de coin (21) qui est inclinée par rapport à la deuxième surface de serrage (19) et qui est en contact direct avec la première surface en forme de coin (14) dans un état complètement monté du dispositif de serrage (2), dans lequel le premier élément de serrage (3) et le deuxième élément de serrage (4) sont fixés et serrés ensemble dans un état complètement monté au moyen d'un élément de fixation (20) de telle manière que la première surface de serrage (22) et la deuxième surface de serrage (19) soient, par interaction de la première surface en forme de coin (14) et de la deuxième surface en forme de coin (21), pressées contre la structure de support (1) agencée entre la première surface de serrage (22) et la deuxième surface de serrage (19), dans lequel le premier élément de serrage (3) a de plus au moins un premier élément de guidage (13) et le deuxième élément de serrage a au moins un deuxième élément de guidage (8), dans lequel les premier et deuxième éléments de guidage (13, 8) interagissent en tant qu'accessoire de guidage et peuvent être amenés en engagement de telle manière que le deuxième élément de serrage (4) soit retenu au niveau du premier élément de serrage (3) dans une position prémontée et puisse être transféré de la position prémontée à une position complètement montée, **caractérisé en ce que** le deuxième élément de serrage (4) peut tourner de la position prémontée à une position qui, par rapport à l'orientation du deuxième élément de serrage (4) relativement au premier élément de serrage (3), est équivalente à la position complètement montée du deuxième élément de serrage (4).

2. Dispositif selon la revendication 1, **caractérisé en ce que** le deuxième élément de serrage (4) peut tourner d'au moins 40° de la position prémontée à une position qui, par rapport à l'orientation du deuxième élément de serrage (4) relativement au premier élément de serrage (3), est équivalente à la position complètement montée.

3. Dispositif selon la revendication 2, **caractérisé en ce que** le deuxième élément de serrage (4) peut tourner d'au moins 80° de la position prémontée à une position qui, par rapport à l'orientation du deuxième élément de serrage (4) relativement au premier élément de serrage (3), est équivalente à la position complètement montée.

4. Dispositif selon l'une des revendications 1 à 3, **caractérisé en ce que** le dispositif comprend en outre la pièce de construction (23), dans lequel la pièce de construction (23), dans un état complètement monté du dispositif de serrage (2), est attachée au dispositif de serrage (2) au moyen de l'élément de fixation (20) fixant les premier et deuxième éléments de serrage (3, 4).

5. Dispositif selon l'une des revendications 1 à 4, **caractérisé en ce que** soit le premier élément de guidage (13) soit le deuxième élément de guidage (8) est réalisé sous la forme d'au moins un goujon, dans lequel l'autre élément de guidage respectif est réalisé sous la forme d'au moins une rainure, dans lequel le goujon peut être amené en engagement avec la rainure.

6. Dispositif selon la revendication 5, **caractérisé en ce que** l'élément de guidage (13) réalisé sous la forme d'au moins un goujon et l'élément de guidage (8) réalisé sous la forme d'au moins une rainure sont conformés de telle manière que le premier élément de serrage (3) et le deuxième élément de serrage (4) ne puissent être amenés en engagement que dans une certaine orientation.

7. Dispositif selon l'une des revendications 5 ou 6, **caractérisé en ce que** le premier élément de serrage (3) a deux premiers éléments de guidage (13), qui sont agencés sur des côtés opposés du premier élément de serrage (3) en symétrie spéculaire, dans lequel le deuxième élément de serrage (4) a deux deuxièmes éléments de guidage (8), qui sont agencés sur des côtés opposés du deuxième élément de serrage (4) en symétrie spéculaire.

8. Dispositif selon l'une des revendications 1 à 7, **caractérisé en ce que** le dispositif comprend en outre la structure de support (1), dans lequel la structure de support (1) a un accessoire de guidage (9), avec lequel le premier élément de serrage (3) peut être amené en engagement.

9. Dispositif selon la revendication 8, **caractérisé en ce que** le premier élément de serrage (3) est monté, de manière mobile, sur la structure de support (1) au moyen de l'accessoire de guidage (9).

10. Dispositif selon l'une des revendications 8 ou 9, **caractérisé en ce que** l'accessoire de guidage (9) de la structure de support (1) est réalisé sous la forme d'une fente, sur laquelle le premier élément de serrage (3) est monté de manière mobile.

11. Dispositif selon l'une des revendications 5 à 7, ainsi que la revendication 10, **caractérisé en ce que** l'élément de guidage réalisé sous forme de goujon fait partie du premier élément de serrage (3), dans lequel l'accessoire de guidage (9) de la structure de support (1) réalisé sous la forme d'une première fente a au moins une deuxième fente (6) interconnectée avec la première fente, dans lequel le premier élément de serrage (3) peut être inséré à travers la deuxième fente (6) avec le goujon, et peut être amené en engagement par déplacement de telle manière que le premier élément de serrage (3) soit retenu sur la structure de support (1).

12. Dispositif selon l'une des revendications 1 à 11, **caractérisé en ce que** la structure de support (1) a, sur au moins un côté, une échelle (5) appropriée pour déterminer la position de la pièce de construction (23).

13. Dispositif selon l'une des revendications 1 à 12, **caractérisé en ce que** l'élément de fixation (20) fixant le premier élément de serrage (3) et le deuxième élément de serrage (4) est réalisé sous la forme d'une vis.

14. Dispositif selon la revendication 13, **caractérisé en ce que** le filetage (16) destiné à recevoir la vis est réalisé dans l'un du premier ou du deuxième élément de serrage (3, 4) lui-même.

15. Armoire de câblage avec entretoises verticales (25) et entretoises horizontales sur laquelle au moins une structure de support (1) en forme de rail de support, à laquelle une pièce de construction (23) en forme de plaque de montage ou de rail de montage est attachée au moyen d'un dispositif de maintien, peut être montée, **caractérisée en ce que** le dispositif de maintien est un dispositif selon l'une des revendications 1 à 14.
